Europäisches Patentamt

European Patent Office

Office européen des brevets

(19)

(11) Veröffentlichungsnummer: 0 240 734

A1

## (12) EUROPÄISCHE PATENTANMELDUNG

(21) Anmeldenummer: 87103191.0

(22) Anmeldetag: 06.03.87

(51) Int. Cl.⁴: A01C 17/00

(30) Priorität: 08.03.86 DE 8606403 U

(43) Veröffentlichungstag der Anmeldung:
14.10.87 Patentblatt 87/42

(84) Benannte Vertragsstaaten:
AT BE CH DE ES FR GB IT LI LU NL SE

(71) Anmelder: Amazonen-Werke H. Dreyer GmbH
& Co. KG
Postfach 51
D-4507 Hasbergen-Gaste(DE)

(72) Erfinder: Dreyer, Heinz Dr.agr.
Am Amazonenwerk 7
D-4507 Hasbergen(DE)

(74) Vertreter: Patentanwälte Grünecker,
Kinkeldey, Stockmair & Partner
Maximilianstrasse 58
D-8000 München 22(DE)

(54) Schleuderdüngerstreuer.

(57) Die Erfindung betrifft einen Schleuderstreuer (1) zum Ausbringen von Düngemitteln mit zwei Breitschleuderscheiben (3, 4), die zum Breitstreuen beide auf zugehörigen Antriebswellen (11) nebeneinanderliegend angeordnet sind und jeweils mindestens zwei Wurfelemente (7, 8) aufweisen und mit einer ebenfalls mit Wurfelementen (13, 14, 13', 14') versehenen Grenzstreuscheibe (12, 12'), die zum Bestreuen des Feldrandes gegen eine (4) der beiden Breitschleuderscheiben austauschbar ist, wobei die Abwurfkanten (15, 16, 15', 16') der Wurfelemente (13, 14, 13', 14') der Grenzstreuscheibe (12, 12') zur Antriebswelle einen kleineren Abstand als die Abwurfkanten der Wurfelemente der Breitschleuderscheibe (3, 4) haben.

Um ein gleichmäßiges Streubild auch am Feldrand zu erhalten, wird bei einem solchen Schleuderdüngerstreuer (1) vorgeschlagen, daß zum Grenzstreuen eine Grenzstreuscheibe (12, 12') eingesetzt wird, die die gleiche Anzahl von Wurfelementen (13, 14, 13', 14'), wie die auf der anderen Antriebswelle angeordnete Schleuderscheibe aufweist.

FIG. 4

Die Erfindung betrifft einen Schleuderdüngerstreuer zum Ausbringen von Düngemittel, mit zwei Breitschleuderscheiben, die zum Breitstreuen beide auf zugehörigen Antriebswellen nebeneinanderliegend angeordnet sind und jeweils mindestens zwei Wurfelemente aufweisen und mit einer ebenfalls mit Wurfelementen versehenen Grenzstreuscheibe, die zum Bestreuen des Feldrandes gegen eine der beiden Breitschleuderscheiben austauschbar ist, wobei die Abwurfkanten der Wurfelemente der Grenzstreuscheibe zur Antriebswelle einen kleineren Abstand als die Abwurfkanten der Wurfelemente der Breitschleuderscheibe haben.

Ein solcher Schleuderdüngerstreuer ist aus der DE-PS 30 49 070 bekannt. Bei diesem Schleuderstreuer wird eine der beiden Breitschleuderscheiben beim Grenzstreuen gegen eine Grenzstreuscheibe ausgetauscht. Dabei wird die Grenzstreuscheibe auf die auf der Feldrandseite liegende Antriebswelle aufgesetzt. Die Grenzstreuscheibe streut dann zum Feldrand hin mit einer geringeren Breite als die auf der anderen Antriebswelle angeordnete Breitschleuderscheibe, so daß man am Feldrand dann eine abfallende Streustärke erreicht. Mit der bekannten Grenzstreuscheibe wird dies im wesentlichen dadurch erreicht, daß man die Wurfelemente auf der Grenzstreuscheibe entsprechend anstellt und auch den Abstand der Abwurfkanten, d.h., der äußeren Teile der Wurfelemente zur Antriebsachse gegenüber den Breitschleuderscheiben verringert. Hieraus resultiert eine Verminderung der Abwurfgeschwindigkeit der auszustreuenden Partikel, die mit der Grenzstreuscheibe ausgestreut werden, so daß deren Wurfweite geringer wird. Auf der zum Feldinneren gelegenen Seite bleibt dagegen die Überlappung der Streubilder erhalten. Die bekannte Grenzstreuscheibe verwendet vier Wurfelemente, von denen zwei radial angestellt sind, während zwei winkelsymmetrisch zueinander und mit Winkeln zu den an die Kreisbahnen der äußeren Teile der Wurfelemente angelegten Tangenten stehen. Es hat sich herausgestellt, daß mit solchen Grenzstreuscheiben nur ein unzureichend gleichmäßiges Streubild für das Feldrandbestreuen bei verschiedenen Düngersorten zu erreichen ist. Vor allem tritt dieser Nachteil auf, wenn man in einem sehr großen Abstand, d.h., bis zu 12 m vom Feldrand aus, mit dem Schleuderdüngerstreuer die Feldränder mit Düngemittel bis an den Feldrand hin bestreuen will, ohne daß über den Feldrand Dünger hinausgeschleudert wird. Es hat sich herausgestellt, daß die Gleichmäßigkeit des Streubildes, das mit dieser bekannten Grenzstreuscheibe erzielbar ist, noch verbessert werden kann.

Der Erfindung liegt die Aufgabe zugrunde, einen Schleuderstreuer der eingangs genannten Art anzugeben, bei dem das Grenzstreuen auch bei breiten Feldrandstreifen mit einer gleichen Streustärke wie im übrigen Feld möglich ist, ohne daß dabei das auszustreuende Gut, insbesondere Düngemittel, über den Feldrand hinausgeschleudert wird.

Gelöst wird diese Aufgabe bei einem Schleuderdüngerstreuer der eingangs genannten Art dadurch, daß zum Grenzstreuen eine Grenzstreuscheibe eingesetzt wird, die die gleiche Anzahl von Wurfelementen wie die auf der anderen Antriebswelle angeordnete Breitschleuderscheibe aufweist.

Es hat sich gezeigt, daß mit dieser Maßnahme nicht nur die Ausbildung der Grenzstreuscheiben wesentlich einfacher wird, sondern daß auch das Streubild auf der Feldrandseite eine Streustärke aufweist, wie es auch beim Bestreuen im Feldinneren erzielt wird. Dies ergibt sich insbesondere aus der Tatsache, daß die Grenzstreuscheiben nun mit der gleichen Anzahl von Wurfelementen pro Umdrehung auswerfen wie die Breitschleuderscheibe. Durch den kleineren Abstand der Abwurfkanten der Wurfelemente der Grenzstreuscheibe im Vergleich mit den Breitschleuderscheiben wird dabei lediglich die Wurfbreite beeinflußt, nicht jedoch die Streustärke. Über die verringerte Wurfbreite läßt sich dann sicherstellen, daß sich am Feldrand das gewünschte Abfallen der Streustärke einstellt.

Durch die erfindungsgemäße Lösung wird praktisch die Anordnung der Wurfelemente, wie sie auf der Breitschleuderscheibe eingesetzt werden, auf die Grenzstreuscheibe übertragen. Die Anstellung der Wurfelemente der Grenzstreuscheibe sollte dabei zumindest annähernd gleich der Anstellung der Wurfelemente auf der Breitschleuderscheibe sein. Bei Schleuderstreuern, deren Breitschleuderscheiben nur zwei Wurfelemente aufweisen, verwendet die Erfindung auf der Grenzstreuscheibe ebenfalls nur zwei Wurfelemente.

In einer vorteilhaften Weiterbildung der Erfindung ist vorgesehen, daß die Abwurfkanten der beiden Wurfelemente der Grenzstreuscheibe unterschiedliche Abstände zur Nabe der Grenzstreuscheibe haben. Mit dieser Maßnahme wird erreicht, daß vor allem für das Bestreuen der Feldränder in Fällen, in denen der Schleuderstreuer 8 bis 12 m von der Feldrandgrenze entfernt läuft, auch dann noch eine gleichmäßige Bestreuung des Feldrandstreifens erhalten werden kann, weil die unterschiedliche Lage der Abwurfkanten dazu führt, daß die beiden periodisch ausstreuenden Wurfelemente unterschiedlich weit werfen, so daß insgesamt über die gesamte Breite eine hohe Gleichmäßigkeit erhalten wird.

Der unterschiedliche Abstand der Abwurfkanten wird in konstruktiv einfacher Weise bei einer vorteilhaften Ausgestaltung dadurch verwirklicht, daß die beiden Wurfelemente der Grenzstreuscheibe die gleiche Form haben und in unterschiedlichem Radialabstand zur Nabe der Grenzstreuscheibe angeordnet sind.

Eine weitere sehr vorteilhafte Ausgestaltung der Erfindung sieht vor, daß die Wurfelemente der Grenzstreuscheibe für die jeweilige Grenzstreubreite in unterschiedlichen Winkeln zur Radialen einstellbar sind und daß die Länge der Wurfschaufeln für die jeweilige Breite des zu bestreuenden Grenzstreifens unterschiedlich ist. Dadurch kann der Landwirt auswählen, welche Grenzstreuscheibe für den jeweils,beispielsweise bei Anwendung der Fahrgassentechnik,verbleibenden Randstreifen eingesetzt werden soll, wobei immer gewährleistet ist, daß für unterschiedliche Feldrandbreiten der Grenzstreifen mit gleichmäßiger Streustärke bestreut werden kann. Der Hersteller gibt dabei dem Landwirt genau an, welche Grenzstreuscheibe bei welcher Feldrandbreite einzusetzen ist.

Es hat sich auch herausgestellt, daß es ausreichend ist, jeweils nur Grenzstreuscheiben für eine, d.h. nur die rechte oder die linke Seite des Schleuderstreuers vorzusehen, wobei dann beim Ausstreuvorgang so begonnen werden muß, daß der Feldrand auf der Seite liegt, für die die Grenzstreuscheibe vorgesehen ist. Dadurch kann man mit einer geringen Anzahl von Grenzstreuscheiben auskommen.

Die Erfindung wird im folgenden anhand der in der Zeichnung dargestellten Ausführungsbeispiele weiter erläutert und beschrieben.

Dabei zeigt

Figur 1 eine schematische Ansicht von hinten auf einen Schleuderstreuer mit dem Streubild, das mit diesem Schleuderstreuer erzielt wird,

Figur 2 zeigt die Anordnung und Ausbildung der Schleuderscheiben, wie sie zur Erzielung des Streubildes nach Figur 1 eingesetzt werden,

Figur 3 zeigt eine schematische rückwärtige Ansicht auf den Schleuderstreuer, wobei auf der rechten Seite eine Grenzstreuscheibe eingesetzt ist, mit dem damit erhaltenen Streubild,

Figur 4 zeigt die in Figur 3 verwendeten Scheiben,

Figur 5 zeigt ein anderes Ausführungsbeispiel in einer schematischen Ansicht von hinten auf einen Schleuderstreuer, wie er zum Grenzstreuen eingesetzt wird und

Figur 6 zeigt die Anordnung und Ausbildung der Scheiben, wie sie zur Erzielung des Streubildes nach Figur 5 verwendet werden.

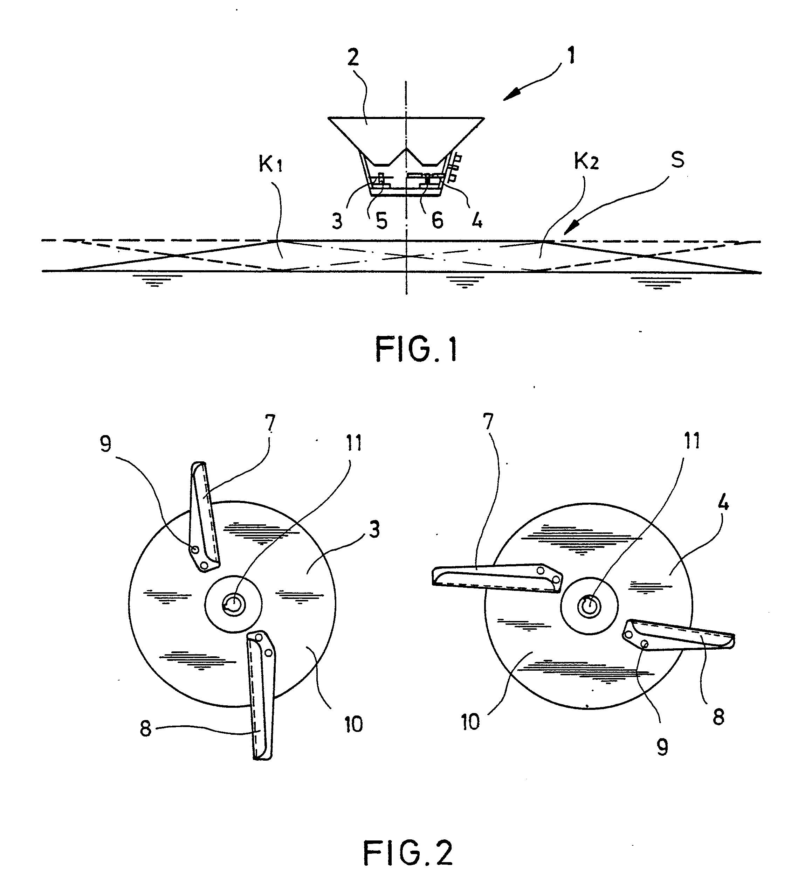

In Figur 1 ist der nur schematisch dargestellte Schleuderstreuer insgesamt mit 1 bezeichnet. Der Schleuderstreuer weist einen Vorratsbehälter 2 auf. Unterhalb des Vorratsbehälters sind zwei Schluderscheiben 3 und 4 angeordnet, die auf zugehörigen, nebeneinanderliegenden Antriebswellen 5 und 6 drehbar angetrieben werden. Die Schleuderscheiben werden mit zueinander entgegengesetztem Drehsinn angetrieben. Die Schleuderscheiben, mit denen das in Figur 1 gezeigte Streubild S erzielt werden kann, sind in Figur 2 dargestellt. Diese Schleuderscheiben sind Breitschleuderscheiben, mit jeweils zwei Wurfelementen 7 bzw. 8. Die Wurfelemente 7 bzw. 8 werden mit Schrauben mit den Tellern 10 befestigt. Die Anordnung der Wurfelemente ist so, daß sie sich an den Tellern im wesentlichen gegenüberliegen.Die Teller 10 sitzen auf Naben 11, wobei die Anordnung so gewählt ist, daß die Wurfelemente der einen Breitschleuderscheibe 3 immer periodisch abwechselnd mit den Wurfelementen der anderen Breitschleuderscheibe 4 auswerfen, d.h., in zeitlicher Abfolge betrachtet werfen die Schleuderscheiben immer abwechselnd mit einem Wurfelement aus. Das Streubild, das mit den in Figur 2 dargestellten Breitschleuderscheiben erzielt wird, ist, wie erwähnt, in Figur 1 gezeigt. Die Schleuderscheibe 3 erzeugt dabei alleine betrachtet den Streukegel $K_1$, dessen linke Anstiegsflanke durchgezogen und dessen rechte abfallende Flanke strichpunktiert gezeigt ist. Die rechte Breitstreuscheibe 4 erzeugt ebenfalls einen symmetrisch dazuliegenden Streukegel $K_2$, dessen rechte Kante ebenfalls durchgezogen und dessen linke Kante strichpunktiert gezeichnet ist. Insgesamt wird aber durch die Überlappung der beiden Kegel $K_1$ und $K_2$ im mittleren Bereich ebenfalls ein gleichmäßiges Streubild erzielt. Die nach außen abfallenden Flanken der Kegel überlappen sich mit angrenzenden Streukegeln, so daß sich insgesamt ein gleichmäßiges Streubild erzielen läßt.

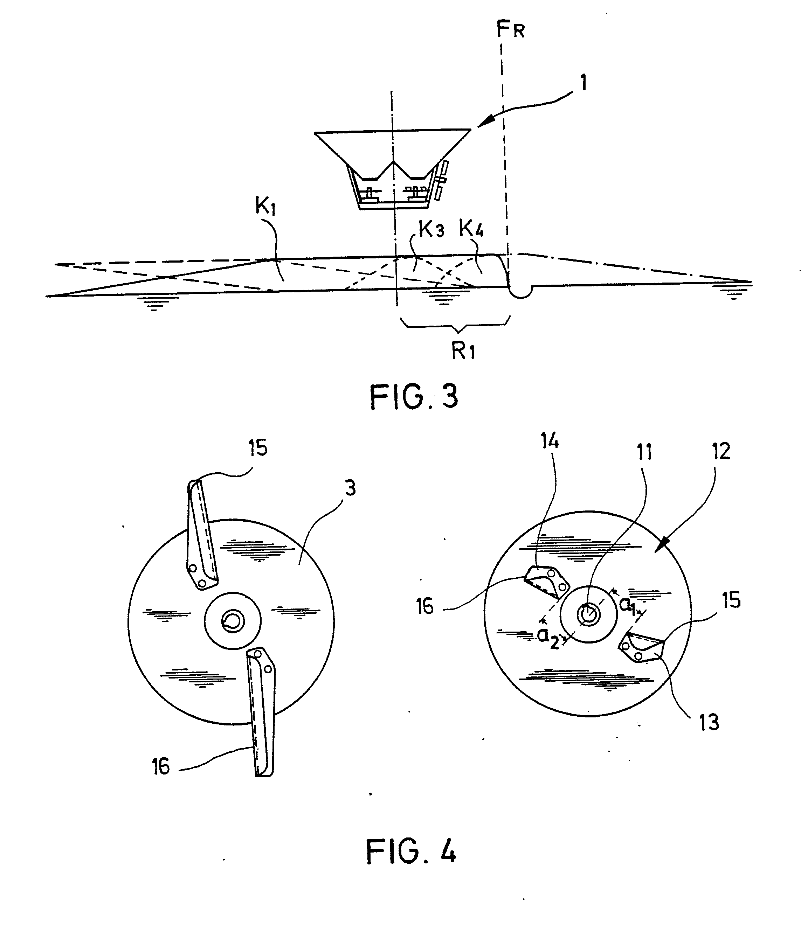

In den Figuren 3 und 4 ist nun ein erstes Ausführungsbeispiel für das Grenzstreuen gezeigt. Dabei wurde bei dem Schleuderstreuer 1 die in Figur 1 rechte Breitstreuscheibe 4 durch die Grenzstreuscheibe 12 ausgetauscht, während die Breitschleuderscheibe 3 beibehalten wurden. Die Grenzstreuscheibe 12 weist ebenso wie die auf der anderen Antriebswelle angeordnete Breitschleuderscheibe 3 zwei Wurfelemente 13 auf, die im wesentlichen gegenüberliegend der Nabe 11 angeordnet sind. Die beiden Wurfelemente 13 und 14 haben die identische Form, sind jedoch mit unterschiedlichen Radialabständen zur Nabe 11 angeordnet. Das Wurfelement 13 besitzt den größeren Abstand $a_1$ zur Nabe 11, während das Wurfelement 14 mit kleinerem Abstand $a_2$ zur Nabe angeordnet ist. Dadurch liegt die Abwurfkante 15 des Wurfelementes 13 radial weiter außen bezüglich der Nabe 11 als die Abwurfkante 16 des Wurfelements 14. Dies hat zur Folge, daß vom Wurfelement 14 ein Streukegel erzeugt wird, der weiter innen bezüglich der Schleuderstreumitte liegt, während das Wurfelement 13 etwas weiter nach außen streut. Beide Wurfelemente 13 und 14 liegen jedoch, wie Figur 4 unmittelbar zeigt, mit ihren Wurfkanten 15 und 16 beträchtlich näher an der Nabe 11 als die Abwurfkanten 15 und 16 der Breitschleuderscheibe 3. Das Streubild, das mit dieser Schleuderscheibenanordnung erhalten werden kann ist in Figur 3 zu erkennen. Die linke Breitschleuderscheibe 3 erzeugt wieder den Kegel $K_1$, wie er auch in Figur 1 dargestellt ist. Das Wurfelement 14 mit dem kleineren Abstand $a_2$ zur Nabe 11 erzeugt den Kegel $K_3$ während das weiter außen zur Nabe 11 angeordnete Wurfelement 13 der Grenzstreuscheibe ein Wurfbild erzeugt, das in Figur 3 mit $K_4$ bezeichnet ist. Die starke Abnahme zum Feldrand $F_R$ des Wurfbildes $K_4$ ergibt sich aus der durch den geringeren Radialabstand der Abwurfkante 15 bedingten geringeren Abwurfgeschwindigkeit, wobei die Asymmetrie eine Folge davon ist, daß für die weiter nach außen abgeworfenen Düngerpartikeln der Luftwiderstand immer stärker sich bemerkbar macht, und die Partikel dann am Feldrand im wesentlichen nur noch senkrecht zu Boden fallen. Durch Überlagerung der Kegel $K_1$, $K_3$ und des Wurfbildes $K_4$ erhält man, wie man aus Figur 3 erkennt, somit auch bis zum Feldrand $F_R$ eine im wesentlichen gleichmäßige Streudichte, wie das die durchgezogene Linie zeigt, die am Feldrand $F_R$ im wesentlichen auf Null abfällt.

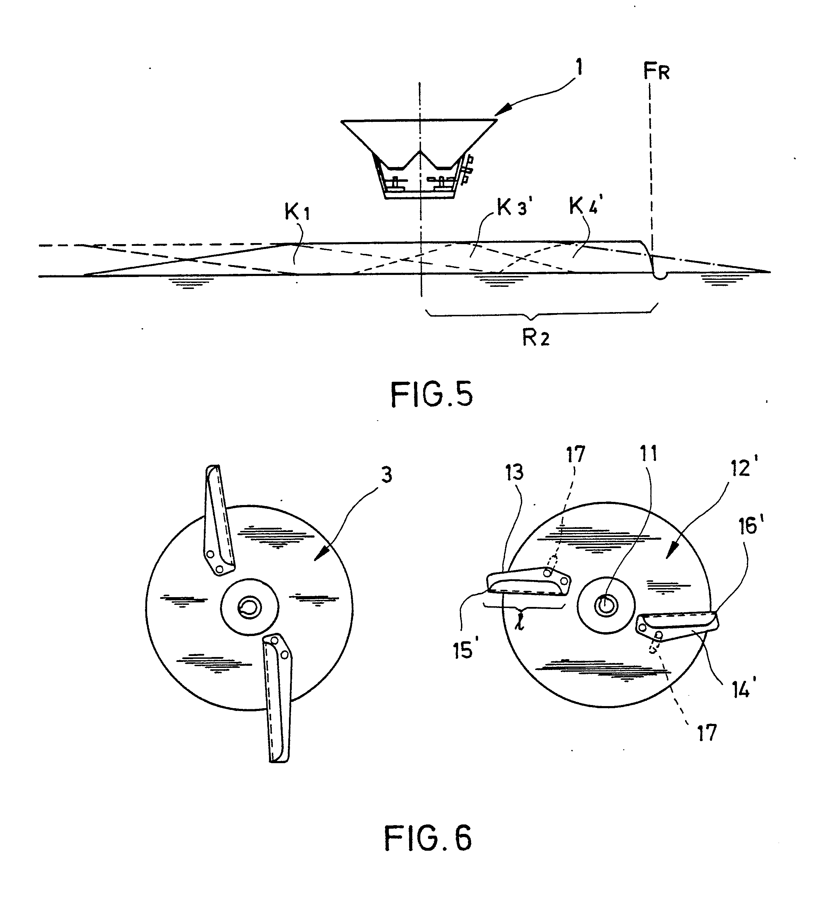

In den Figuren 5 und 6 ist dargestellt, wie durch Austausch der Grenzstreuscheibe 12 nach Figur 4 und Ersetzen mit einer Grenzstreuscheibe 12' das Bestreuen eines Feldrandstreifens $R_2$ vorgenommen werden kann, der breiter als der Feldrandstreifen $R_1$ nach Figur 3 ist. Die Grenzstreuscheibe 12' besitzt ebenfalls wieder zwei Wurfelemente 13' und 14', entsprechend der Anzahl der Breitstreuscheibe 3. Jedoch ist die Wurfschaufellänge I der Grenzstreuscheibe 12' größer als diejenige der Grenzstreuscheibe 12. Die Abwurfkanten 15' bzw. 16' liegen dabei in einem größeren Abstand zur Nabe 11 wie die entsprechenden Kanten 15 und 16 der Grenzstreuscheibe 12. Durch eine solche Wurfelementanordnung auf der Grenzstreuscheibe 12' ergeben sich die in Figur 5 mit $K_3$, und $K_4$, bezeichneten Wurfbilder, die sich ebenfalls wieder über den Feldrandstreifen zu einer gleichmäßigen Streustärke überlagern, die jedoch im Feldrand $F_R$ stark abfällt. Wie ein Vergleich der Figuren 3, 4 mit den Figuren 5 und 6 zeigt, läßt sich mit der Grenzstreuscheibe nach der Figur 6 ein breiterer Feldrandstreifen bestreuen, beispielsweise ein Feldrandstreifen mit 12 m Breite, während das Ausführungsbeispiel nach den Figuren 3 und 4 für eine Feldrandbreite von z.B. 6 m abgestimmt ist. In der Figur 6 ist an der Grenzstreuscheibe 12' eine Schlitzführung 17 angedeutet, über die eine Winkelverstellung der Wurfelemente 13 bzw. 14 möglich ist. Zum Verstellen muß die in der Schlitzführung 17 liegende Schraube gelöst werden, so daß dann das Wurfelement um die andere Schraube verdreht werden kann. Dann kann durch Anziehen der in der Schlitzführung 17 gelegenen Schraube die Lage fixiert werden, so daß sich einfach unterschiedliche Winkel zur Radialen einstellen lassen und eine optimale Anpassung auch an unterschiedliche Streubreiten möglich ist.

Eine weitere Vereinfachung ergibt sich dadurch, daß die Grenzstreuscheiben 12, 12' immer nur gegen eine Breitstreuscheibe auf einer Seite, d.h. entweder der linken oder der rechten Seite auszutauschen ist. In den gezeigten Ausführungsbeispielen ist das jeweils nur die linke Breitstreuscheibe, die gegen eine Grenzstreuscheibe ausgetauscht wird. Es wird also jeweils die linke Feldrandgrenze in Fahrtrichtung des Schleuderstreuers gesehen, von der Grenzstreuscheibe mit gleichmäßiger Streustärke bis an die Feldrandgrenze heran bestreut, ohne daß Düngemittel in nennenswertem Umfang über die Feldrandgrenze hinaus geschleudert wird.

**Ansprüche**

1. Schleuderdüngerstreuer (1) zum Ausbringen von Düngemitteln, mit zwei Breitschleuderscheiben (3, 4), die zum Breitstreuen beide auf zugehörigen Antriebswellen (11) nebeneinanderliegend angeordnet sind und jeweils mindestens zwei Wurfelemente (7, 8) aufweisen und mit einer ebenfalls mit Wurfelementen (13, 14; 13', 14') versehenen Grenzstreuscheibe (12, 12'), die zum Bestreuen des Feldrandes gegen eine (4) der beiden Breitschleuderscheiben (3, 4) austauschbar ist, wobei die Abwurfkanten (15, 16; 15', 16') der Wurfelemente (13, 14; 13', 14') der Grenzstreuscheibe (12, 12') zur Antriebswelle einen kleineren Abstand als die Abwurfkanten der Wurfelemente der Breitschleuderscheiben (3, 4) haben, dadurch **gekennzeichnet**, daß zum Grenzstreuen eine Grenzstreuscheibe (12, 12') eingesetzt wird, die die gleiche Anzahl von Wurfelementen (13, 14; 13', 14') wie die auf der anderen Antriebswelle (11) angeordnete Breitschleuderscheibe (3) aufweist.

2. Schleuderdüngerstreuer nach Anspruch 1, dadurch **gekennzeichnet**, daß auf der Grenzstreuscheibe (12, 12') und auf

der Breitschleuderscheibe (3) jeweils zwei im wesentlichen um 180° versetzt zueinanderliegende Wurfelemente (13, 14; 13', 14') angeordnet sind.

3. Schleuderdüngerstreuer nach Anspruch 2,
dadurch **gekennzeichnet,**
daß die Abwurfkanten (15, 16; 15'. 16') der Grenzstreuscheiben (12, 12') unterschiedliche Abstände zur Antriebswelle (11) der Grenzstreuscheibe aufweisen.

4. Schleuderdüngerstreuer nach Anspruch 3,
dadurch **gekennzeichnet,**
daß die beiden Wurfelemente (13, 14; 13', 14') der Grenzstreuscheibe (12, 12') die gleiche Form haben und in unterschiedlichem Radialabstand ($a_1$, $a_2$) zur Antriebswelle (11) der Grenzstreuscheibe (12, 12') angeordnet sind.

5. Schleuderdüngerstreuer nach · wenigstens einem der vorangegangenen Ansprüche,
dadurch **gekennzeichnet,**
daß die Wurfelemente (13, 14; 13', 14') der Grenzstreuscheibe (12, 12') für die jeweilige Grenzstreubreite ($R_1$, $R_2$) in unterschiedlichen Winkeln zur Radialen einstellbar sind und daß die Länge (1) der Wurfelemente (13, 14; 13'. 14') für die jeweilige Breite ($R_1$, $R_2$) des zu bestreuenden Grenzstreifens unterschiedlich ist.

6. Schleuderstreuer nach wenigstens einem der vorangegangenen Ansprüche,
dadurch **gekennzeichnet,**
daß die Grenzstreuscheibe (12, 12') gegen die in Fahrtrichtung gesehen linke Breitstreuscheibe (4) der beiden Breitstreuscheiben (3, 4) zum Grenzstreuen ausgetauscht wird.

FIG.1

FIG.2

FIG. 3

FIG. 4

FIG.5

FIG.6

# EUROPÄISCHER RECHERCHENBERICHT

**Europäisches Patentamt**

Nummer der Anmeldung

EP 87 10 3191

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | DE-C-3 049 070 (AMAZONEN-WERKE H. DREYER) <br> * Anspruch 1 * | 1 | A 01 C 17/00 |
| | --- | | |
| A | GB-A-2 111 865 (AMAZONEN-WERKE H. DREYER) <br> * Figuren 2, 6 * | 1 | |
| | ----- | | |

**RECHERCHIERTE SACHGEBIETE (Int. Cl.4)**

A 01 C 17/00

Der vorliegende Recherchenbericht wurde für alle Patentansprüche erstellt.

| Recherchenort | Abschlußdatum der Recherche | Prüfer |
|---|---|---|
| BERLIN | 07-07-1987 | SAMWEL P.N. |